# EUROPEAN PATENT APPLICATION

(11) **EP 1 622 373 A1**
(43) Date of publication of application: **01.02.2006**
(21) Application number: 05254133.1
(22) Date of filing: 30.06.2005
(51) Int. Cl.: H04N 5/445, H04N 7/16

(54) **Method of notifying a user of payment information for a pay program and a broadcast receiver for performing the same**

(30) Priority: 01.07.2004 KR 2004051126
(71) Applicant: Samsung Electronics Co, Ltd, Suwon-si, Gyeonggi-do (KR)
(72) Inventor: Cho, Leek-soo, Uiwang-si Gyeonggi-do (KR)
(74) Representative: Robinson, Ian Michael

(57) **Abstract**

A method of notifying a user of payment information for a pay program in a broadcast receiver is provided. The broadcast receiver includes a broadcast reception unit (30), which receives a broadcast signal of the pay program, a smart card (6), which comprises subscriber information, a conditional reception module (12), which compares authentication information included in the broadcast signal with the subscriber information and descrambles the broadcast signal if a user of the broadcast receiver is an authorized user, a valid information verification module (21), which extracts valid information from the descrambled broadcast signal, and an acoustic output unit (50), which notifies the user that the value of the extracted valid information is less than a predetermined critical value by using speech if the value of the extracted valid information is less than the predetermined critical value.

## Description

The present invention relates to a digital broadcast receiver. More particularly, the present invention relates to a method of notifying a user of payment information for a pay program, which is performed in a digital broadcast receiver.

TV broadcasting is currently moving from an analog broadcasting system to a digital broadcasting system. In many countries, TV broadcasting has been digitalized since around 2000. The digitalization of TV broadcasting is expected to be completed by around 2010, and thus, afterwards, analog broadcasts will not be serviced any more while digital broadcasts are expected to have even wider use in the future.

In anticipation of a rapid increase in a wide variety of digital multimedia service programs, effective protection and management of digital multimedia service providers' revenue and consumers' rights have become a subject of great public attention and concern. In this regard, in order to effectively protect those rights, techniques for efficiently protecting and managing copyrights of multimedia content should be developed. Digital data, in particular, can be easily and quickly copied and can be unlimitedly transmitted and distributed. In addition, even copied digital data provides flexibility in editing and composition without degrading the quality of the original digital data.

Recent developments in satellite- or network-based data transmission technology would be a benefit to users because they can maximize a users' convenience by efficiently providing a variety of multimedia services, such as music or video services, to users, but they would be an intimidation to service providers or copyright holders because they make it more difficult to stably provide multimedia content to users. This is especially true when considering that an increasing number of literary, musical, dramatic, or artistic works have been digitalized and digital data can be easily copied, edited, and distributed illegally using personal computers. Accordingly, a more vigorous research on the protection of copyrights of multimedia content is strongly required.

Digital broadcasting is characterized by providing multiple channels, high-quality broadcast programs, and multiple functions. The development of multiplexing technology has enabled video, audio, and other data to be transmitted together, regardless of their contents and sizes, and interactive services to be provided to many viewers through the formation of return channels based on modems. Accordingly, digital broadcasting can overcome restrictions of conventional analog broadcasting and can provide high value-added multimedia services to viewers. However, unless a desired level of security is established between a sender and a receiver of digital broadcasting, the current commercial base of digital broadcasting may collapse. Broadcasting businesses anticipate that they will be able to break from conventional ways of doing business, such as depending on advertisement revenues, and provide high-quality broadcasting services to their subscribers by increasing the number and variety of channels and that they will be able to collect subscription fees from the subscribers for high-quality pay programs according to either a pay-per-time method or a pay-per-view. In addition, broadcasting businesses also expect various multimedia data that they transmit to be received only by authorized subscribers. In order to solve all these problems, a conditional access system (CAS) has been developed.

Nowadays, a user of a set-top box is authenticated on a per-program basis by a CAS and is then allowed to watch a pay program only when successfully authenticated. In this manner, a per-program charging policy can be realized. Specifically, a user is entitled to watch a predetermined pay program or any pay programs for a predetermined amount of time if he or she pays an appropriate subscription fee. If the user's subscription right expires, the user is not able to watch pay programs unless he or she pays for them again. Accordingly, a system, such as a set-top box, should notify the user that his or her subscription right is about to expire and thus prevent the user from being discouraged from watching existing or new pay programs because of unwanted stoppage of broadcasting.

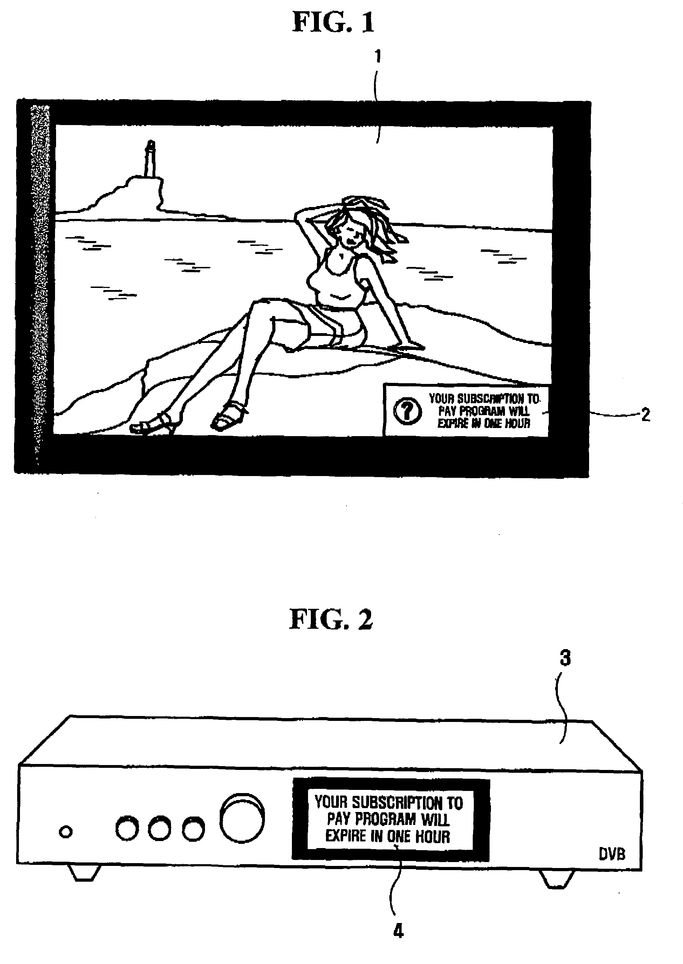

In this regard, a message indicating the user's payment information for a pay program has conventionally been displayed on a main screen 1 of a broadcast display device using an on-screen display 2, as shown in Figure 1, or displayed on a front panel 4 of a set-top box 3 using a light emitting diode (LED), as shown in Figure 2.

However, in the case of the user notification method of Figure 1, a user cannot be notified of whether his or her subscription right expires unless he or she turns on and then watches TV, and may be inconvenienced while watching TV due to the on-screen display 2 blocking part of the main screen 1.

In addition, in the case of the user notification method of Figure 2, the user is likely to overlook the front panel 4 because users tend to focus more on the screen of a TV than on the front panel 4 while watching a TV program.

According to the present invention there is provided an apparatus and method as set forth in the appended claims. Preferred features of the invention will be apparent from the dependent claims, and the description which follows.

The present invention provides a payment information notification method used in a digital broadcast receiver, which notifies a user of payment information on a pay program.

According to an aspect of the present invention, there is provided a broadcast receiver comprising a broadcast reception unit, which receives a broadcast signal of the pay program, a smart card, which comprises subscriber information, a conditional reception module, which compares authentication information included in the broadcast signal with the subscriber information and descrambles the broadcast signal if a user of the broadcast receiver is an authorized user, a valid information verification module, which extracts valid information from the descrambled broadcast signal, and an acoustic output unit, which notifies the user that the value of the extracted valid information is less than a predetermined critical value by using speech if the value of the extracted valid information is less than the predetermined critical value.

The valid information may be one of information on the amount of time left for the user to watch the pay program, and information on the number of times left for the user to watch the pay program.

The broadcast receiver may further comprise an audio and video (AV) reconstruction unit, which reconstructs original video and audio signals from the descrambled broadcast signal.

The acoustic output unit may comprise a voice source storage module, which stores a voice source segment corresponding to a predetermined text message and a default voice source, an acoustic composition module, which provides speech using the voice source segment and the default voice source if the value of the extracted valid information is less than the predetermined critical value, and a speaker, which outputs the speech to the user.

According to another aspect of the present invention, there is provided a method of notifying a user of payment information for a pay program. The method comprising receiving a broadcast signal of the pay program, comparing authentication information contained in the broadcast signal with subscriber information contained in a smart card and descrambling the broadcast signal if a user of the smart card is an authorized user, extracting valid information from the descrambled broadcast signal, and notifying the user that the value of the extracted valid information is less than a predetermined critical value by using speech if the value of the extracted valid information is less than the predetermined critical value.

The valid information may be one of information on the amount of time left for the user to watch the pay program, and information on the number of times left for the user to watch the pay program.

The notifying may comprise storing a voice source segment corresponding to a predetermined text message and a default voice source, providing speech using the voice source segment and the default voice source if the value of the extracted valid information is less than the predetermined critical value, and outputting the speech to the user.

The above and other features and advantages of the present invention will become more apparent by describing in detail preferred embodiments thereof with reference to the attached drawings in which:
Figure 1 is a diagram illustrating a TV screen that displays a message indicating that the right to view a pay program will expire in one hour;
Figure 2 is a diagram illustrating a front panel of a set-top box displaying a message indicating the right to view a pay program will expire in one hour;
Figure 3 is a block diagram of a broadcast receiver according to an exemplary embodiment of the present invention; and
Figure 4 is a flowchart of a method of notifying a user of payment information for a pay program according to an exemplary embodiment of the present invention.

Throughout the drawings, the same or similar elements are denoted by the same reference numerals.

The present invention will now be described more fully with reference to the accompanying drawings, in which an embodiment of the invention is shown. Advantages and features of the present invention and methods of accomplishing the same may be understood more readily by reference to the following detailed description of the embodiment and the accompanying drawings. The present invention may, however, be embodied in many different forms and should not be construed as being limited to the embodiment set forth herein. Rather, this embodiment is provided so that this disclosure will be thorough and complete and will fully convey an example of the concept of the invention to those skilled in the art.

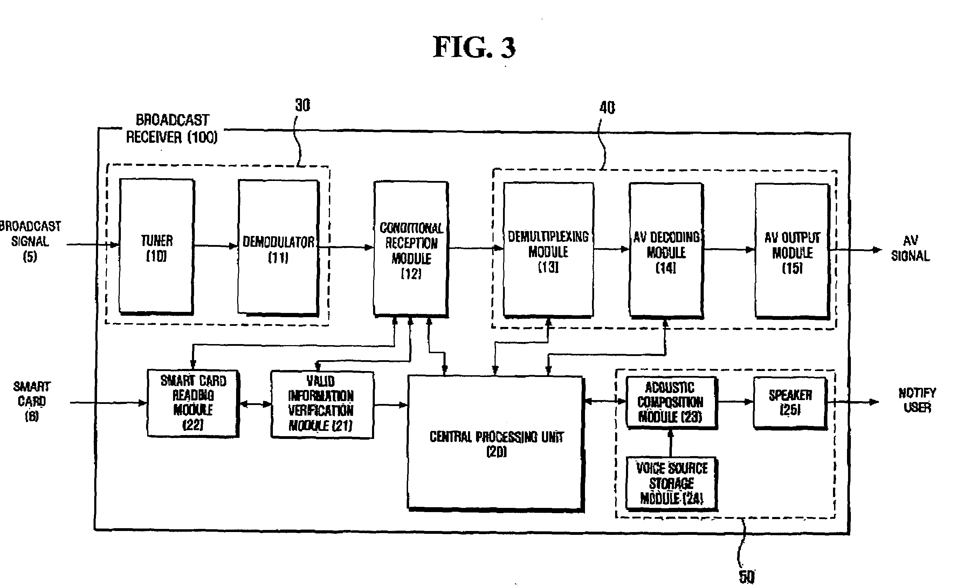

Figure 3 is a block diagram of a broadcast receiver 100 according to an exemplary embodiment of the present invention.

Referring to Figure 3, the broadcast receiver 100 comprises a broadcast reception unit 30, a conditional reception module 12, an audio and video (AV) reconstruction unit 40, a central processing unit 20, a valid information verification unit 21, a smart card reading module 22, and an acoustic output unit 50.

The broadcast receiver 100 will now be described as being applicable in receiving digital terrestrial, satellite, or cable broadcast programs. In addition, the broadcast receiver 100 may comprise a set-top box, a digital TV, and other digital broadcast receivers.

The broadcast reception unit 30 receives a broadcast signal 5. The broadcast reception unit 30 comprises a tuner 10 and a demodulator 11. The tuner 10 converts the broadcast signal 5 to have a middle frequency level, and provides the conversion result to the demodulator 11. For example, the broadcast reception unit 30 receives a broadcast signal from a satellite, detects an I/Q signal from the received broadcast signal, and provides the detected I/Q signal to the demodulator 11.

The demodulator 11 reconstructs a transport stream from the conversion result provided by the tuner 10 and provides the transport stream to the conditional reception module 12. For example, the demodulator 11 may comprise a quadratic phase shift keying (QPSK) demodulator, which performs a QPSK demodulation operation, and a forward error correction (FEC) demodulator, which performs a FEC demodulation operation.

The conditional reception module 12 performs a user authentication operation using the transport module provided by the demodulator 11 using a smart card 6. If the transport stream is successfully authenticated, the conditional reception module 12 descrambles the transport stream and then provides the descrambled transport stream to a demultiplexing module 13. Otherwise, the conditional reception module 12 does not descramble the transport stream. The transport stream, which is scrambled, cannot be reproduced without being descrambled by the conditional reception module 12. Scrambling is an operation of mixing multimedia data according to a predetermined rule so that an unauthorized user cannot view the multimedia data.

The user authentication operation performed by the conditional reception module 12 will now be described in detail. The smart card 6, which is provided by a conditional access system (CAS) supplier, comprises subscriber information. The smart card 6 is a readable and writable memory unit that can be inserted into or detached from the broadcast receiver 100. The subscriber information contained in the smart card 6 is read by the smart card reading module 22, and the read subscriber information is provided to the conditional reception module 12.

The conditional reception module 12 compares authentication information contained in the transport stream provided by the demodulator 11 with the subscriber information read from the smart card 6 by the smart card reading module 22 and performs a user authentication operation by determining whether a user of the broadcast receiver 100 is an authorized user based on the comparison results. An example of the authentication information may be an entitlement command message (ECM).

As a result, if the user is determined to be an authorized user, the conditional reception module 12 descrambles in real time the transport stream provided by the demodulator 11. The descrambled transport stream is reconstructed by the demultiplexing module 13 and the AV decoding module 14 and then displayed.

The descrambled transport stream comprises an entitlement management message (EMM), which comprises valid information specifying the user's rights to a predetermined pay program. The valid information may be information on the amount of time left for the user to watch the predetermined pay program, i.e., the amount of remaining authorized viewing time, or information on the number of times left for the user to watch the predetermined pay program, i.e., the number of remaining authorized viewing times.

The valid information verification module 21 reads the EMM contained in the descrambled transport stream, extracts valid information from the EMM, and determines whether the value of the valid information is less than a predetermined critical value. If the determination results show that the value of the valid information is less than the predetermined critical value, the valid information verification module 21 transmits the valid information to an acoustic composition module 23 via the central processing unit 20. For example, if the broadcast receiver 100 adopts a pay-per-time method and the valid information indicates that the amount of remaining authorized viewing time is not greater than a first critical value tc1, the valid information verification module 21 may notify the acoustic composition module 23 that the amount of remaining authorized viewing time is not greater than the first critical value tc1. On the other hand, if the broadcast receiver 100 adopts a pay-per-view method and the valid information indicates that the number of remaining authorized viewing times is not greater than a second critical value tc2, the valid information verification module 21 notifies the acoustic composition module 23 that the number of remaining authorized viewing times is not greater than the second critical value tc2. The first or second critical value tc1 and tc2 may be set in the broadcast receiver 100 in advance as a default value or may be set later by the user.

The central processing unit 20 issues a command to generate an audible signal such as a voice to the acoustic composition module 23, and the acoustic composition module 23 composes a voice to be output to the user using voice sources stored in a voice source storage module 24 and then outputs the composed voice via a speaker 25.

The acoustic output unit 50 may comprise the acoustic composition module 23, the voice source storage module 24, and the speaker 25. The voice generated by the acoustic composition module 23 may be a beeping sound, and preferably, a composed voice message notifying the user of a current situation. Accordingly, the acoustic output unit 50 may output a composed voice to notify the user of the amount of remaining authorized viewing time or the number of remaining authorized viewing times. In order for the acoustic output unit 50 to output a composed voice, the voice source storage module 24 stores a voice source segment corresponding to a predetermined text message and provides the voice source segment to the acoustic composition module 23 if the acoustic composition module 23 requests the predetermined text message.

For example, assuming that the user's remaining authorized viewing time is 2 hours and the user is notified of the remaining authorized viewing time using a voice message, e.g., "your remaining authorized viewing time is 2 hours". The acoustic composition module 23 stores a default voice source corresponding to "your remaining authorized viewing time is" and a voice source corresponding to a predetermined number of hours, such as 'one hour', 'two hours', or 'three hours'. Thereafter, the voice source storage module 24 receives number information specifying the user's remaining authorized viewing time is 2 hours from the acoustic composition module 23 and returns the default voice source and the voice source corresponding to 'two hours' to the acoustic composition module 23. The acoustic composition module 23 generates the voice message, e.g., "your remaining authorized viewing time is 2 hours", by composing the default voice source and the voice source corresponding to 'two hours' received from the voice source storage module 24 and outputs the generated voice message to the user via the speaker 25.

Referring to Figure 3, the AV reconstruction unit 40 reconstructs original video and audio signals from the transport stream received from the conditional reception module 12. The AV reconstruction unit 40 comprises the demultiplexing module 13, the AV decoding module 14, and an AV output module 15.

The demultiplexing module 13 demultiplexes video and audio signals from the transport stream received from the conditional reception module 12 by parsing the corresponding transport stream under the control of the central processing unit 20 and then provides the video and audio signals to the AV decoding module 14.

The AV decoding module 14 comprises a video decoder and an audio decoder and transmits the video and audio signals received from the demultiplexing module 13 to the AV output module. The AV decoding module 14 may be realized using various audio and video decompression methods and standards, such as Moving Picture Experts Group (MPEG)-2, MPEG-4, MPEG Layer-3 (MP3), and Audio Compression-3 (AC-3).

The AV output module 15 processes the video and audio signals transmitted from the AV decoding module 14 and provides the processed video and audio signals to external video and audio output devices. For example, the AV output module 15 may process the decoded video signal using a National Television Systems Committee (NTSC) encoder. Specifically, the AV output module 15 decodes the video signal and then outputs the decoded video signal to the external video output device. The AV output module 15 may use a phase alternation line (PAL) encoder, instead of the NTSC encoder, to decode the video signal. In addition, the AV output module 15 may decode the audio signal using an audio decoder and a digital-to-analog (D/A) converter and then output the decoded audio signal to the external audio output device.

The central processing unit 20 controls the operation of the entire broadcast receiver 100. The central processing unit 20 may be installed in the conditional reception module 12, the demultiplexing module 13, or the AV decoding module 14 even though illustrated in Figure 3 as a unit separate from the conditional reception module 12, the demultiplexing module 13, or the AV decoding module 14.

In Figure 3, the term 'module', as used herein, means, but is not limited to, a software or hardware component, such as a Field Programmable Gate Array (FPGA) or Application Specific Integrated Circuit (ASIC), which performs certain tasks. A module may advantageously be configured to reside on the addressable storage medium and configured to execute on one or more processors. Thus, a module may comprise, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules. In addition, the components and modules may be implemented such that they execute programs in one or more computers in a communication system.

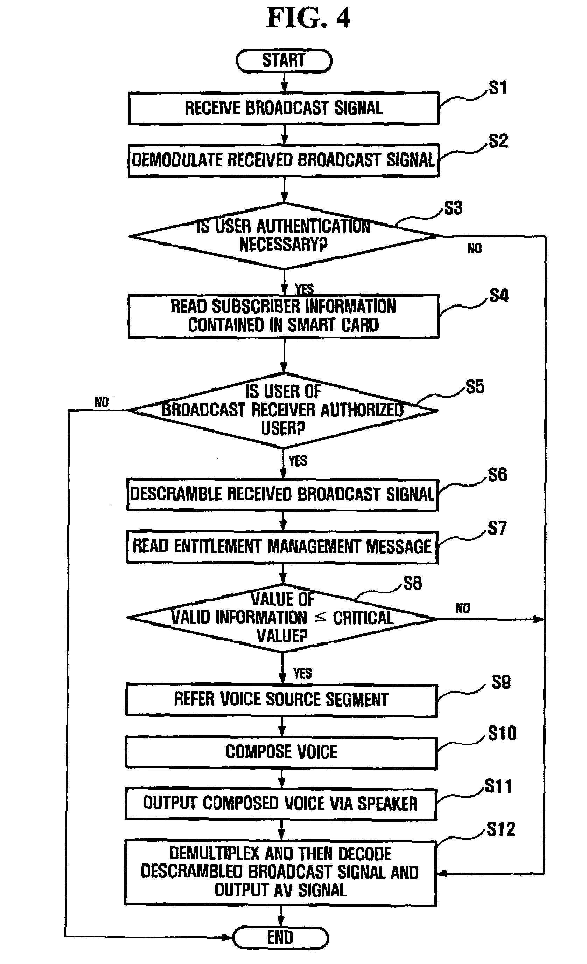

Figure 4 is a flowchart of a method of notifying a user of payment information for a pay program according to an exemplary embodiment of the present invention.

Referring to Figures 3 and 4, in operation S1, a broadcast signal received from a broadcast signal sender by the tuner 10 is converted to have a middle frequency level. The converted broadcast signal is demodulated by the demodulator 11, thereby reconstructing a transport stream. In operation S2, the transport stream is provided to the conditional reception module 12.

In operation S3, it is determined whether a user of the broadcast receiver 100 needs to be authenticated. If the user of the broadcast receiver 100 does not need to be authenticated in operation S3, the conditional reception module 12 bypasses the transport stream. Thereafter, in operation S12, the bypassed transport stream is demultiplexed and then decoded, thereby obtaining an audio or video signal. If the user of the broadcast receiver 100 needs to be authenticated, the conditional reception module 12 reads subscriber information contained in the smart card 6 inserted into the broadcast receiver 100 with the aid of the smart card reading module 22 in operation s4.

Thereafter, the conditional reception module 12 determines whether the user of the broadcast receiver 100 is an authorized user based on a result of comparing authentication information contained in the transport stream with the subscriber information read from the smart card 6 by the smart card reading module 22. If the user of the broadcast receiver 100 is successfully authenticated in operation S5, the transport stream is descrambled in operation S6. In operation S7, the valid information verification module 21 reads an EMM from the descrambled transport stream.

In operation S8, the valid information verification module 21 extracts valid information from the EMM and determines whether the value of the valid information is less than a predetermined critical value. If the determination results show that the value of the valid information is less than the predetermined critical value, the valid information verification unit 21 notifies the acoustic composition module 20 of the determination results via the central processing unit 20.

For example, if the broadcast receiver 100 adopts a pay-per-time method and the valid information indicates that the amount of remaining authorized viewing time is not greater than a first critical value tc1, the valid information verification module 21 notifies the acoustic composition module 23 that the amount of remaining authorized viewing time is not greater than the first critical value tc1. Alternatively, if the broadcast receiver 100 adopts a pay-per-view method and the valid information indicates that the number of remaining authorized viewing times is not greater than a second critical value tc2, the valid information verification module 21 notifies the acoustic composition module 23 that the number of remaining authorized viewing times is not greater than the second critical value tc2.

The acoustic composition module 23 may notify the user of the amount of remaining authorized viewing time or the number of remaining authorized viewing times using a beeping sound, and preferably, a composed voice. The voice source storage module 24 stores a voice source segment corresponding to a predetermined text message and provides the voice source segment to the acoustic composition module 23 if the acoustic composition module 23 requests the predetermined text message.

In operation S9, the acoustic composition module 23 references the voice source segment, if any, provided by the voice source storage module 24 generates a voice to be output to the user based on the voice source segment in operation S10, and outputs the generated voice to the user via the speaker 25 in operation S11.

In operation S12, an audio or video signal is obtained by demultiplexing and then decoding the transport stream descrambled in operation S6 and then is output.

In concluding the detailed description, those skilled in the art will appreciate that many variations and modifications can be made to the embodiments without substantially departing from the principles of the present invention. Therefore, the disclosed embodiments of the invention are used in a generic and descriptive sense only and not for purposes of limitation.

According to the embodiments of the present invention, it is possible to minimize a user's inconvenience caused by non-payment of a subscription fee for a pay program.

In addition, it is possible to efficiently and effectively notify the user of payment information.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A broadcast receiver which notifies a user of payment information for a pay program, the broadcast receiver comprising:
a broadcast reception unit (30), which receives a broadcast signal of the pay program;
a smart card reading module (22), which reads subscriber information from a smart card (6);
a conditional reception module (12), which compares authentication information contained in the broadcast signal with the subscriber information and descrambles the broadcast signal if a user of the broadcast receiver is an authorized user;
a valid information verification module (21), which extracts valid information from the descrambled broadcast signal; and
an acoustic output unit (50), which notifies the user that the value of the extracted valid information is less than a predetermined critical value by using speech if the value of the extracted valid information is less than the predetermined critical value.

2. The broadcast receiver of claim 1, wherein the valid information is one of information on the amount of time left for the user to watch the pay program, and information on the number of times left for the user to watch the pay program.

3. The broadcast receiver of claim 1 or 2, further comprising an audio and video (AV) reconstruction unit (40), which reconstructs original video and audio signals from the descrambled broadcast signal.

4. The broadcast receiver of claim 1, 2 or 3, wherein the acoustic output unit (50) comprises:
a voice source storage module (24), which stores a voice source segment corresponding to a predetermined text message and a default voice source;
an acoustic composition module (23), which provides speech using the voice source segment and the default voice source if the value of the extracted valid information is less than the predetermined critical value; and
a speaker (25), which outputs the speech to the user.

5. The broadcast receiver of claim 4, wherein the conditional reception module (12), the valid information verification module (21), the voice source storage module (24) and the acoustic composition module (23) are disposed on a Field Programmable Gate Array (FPGA.

6. The broadcast receiver of claim 4, wherein the conditional reception module (12), the valid information verification module (21), the voice source storage module (24) and the acoustic composition module (23) are disposed on an Application Specific Integrated Circuit (ASIC).

7. The broadcast receiver of any preceding claim, wherein the valid information comprises an entitlement management message (EMM).

8. The broadcast receiver of any preceding claim, wherein the broadcast reception unit (30) uses at least one of Moving Picture Experts Group (MPEG)-2, MPEG-4, MPEG Layer-3 (MP3), and Audio Compression-3 (AC-3) coding.

9. The broadcast receiver of claim 3, wherein the AV reconstruction unit (40) comprises a National Television Systems Committee (NTSC) encoder.

10. The broadcast receiver of claim 3, wherein the AV reconstruction unit (40) comprises a phase alternation line (PAL) encoder.

11. A method of notifying a user of payment information for a pay program comprising:
receiving a broadcast signal of the pay program;
comparing authentication information contained in the broadcast signal with subscriber information contained in a smart card (6) and descrambling the broadcast signal if a user of the smart card (6) is an authorized user;
extracting valid information from the descrambled broadcast signal; and
notifying the user that the value of the extracted valid information is less than a predetermined critical value by using speech if the value of the extracted valid information is less than the predetermined critical value.

12. The method of claim 11, wherein the valid information is one of information on the amount of time left for the user to watch the pay program, and information on the number of times left for the user to watch the pay program.

13. The method of claim 11 or 12, wherein the notifying comprises:
storing a voice source segment corresponding to a predetermined text message and a default voice source;
providing speech using the voice source segment and the default voice source if the value of the extracted valid information is less than the predetermined critical value; and
outputting speech to the user.

14. The method of claim 11, 12 or 13, wherein the valid information comprises an entitlement management message (EMM).
